(19) Europäisches Patentamt
European Patent Office
Office européen des brevets

(11) Veröffentlichungsnummer: **0 245 786 B1**

(12) **EUROPÄISCHE PATENTSCHRIFT**

(45) Veröffentlichungstag der Patentschrift: **18.08.93**

(51) Int. Cl.$^5$: **C09D 5/44**

(21) Anmeldenummer: **87106657.7**

(22) Anmeldetag: **07.05.87**

# (54) Kathodisch abscheidbares wässriges Elektrotauchlacküberzugsmittel und seine Verwendung.

(30) Priorität: **10.05.86 DE 3615810**

(43) Veröffentlichungstag der Anmeldung:
**19.11.87 Patentblatt 87/47**

(45) Bekanntmachung des Hinweises auf die Patenterteilung:
**18.08.93 Patentblatt 93/33**

(84) Benannte Vertragsstaaten:
**AT BE CH DE ES FR GB IT LI NL SE**

(56) Entgegenhaltungen:
**EP-A- 0 032 570**
**AT-A- 374 487**

(73) Patentinhaber: **Herberts Gesellschaft mit beschränkter Haftung**
**Christbusch 25**
**D-42285 Wuppertal(DE)**

(72) Erfinder: **Hönig, Helmut, Dr.**
**Seebacher Gasse 10**
**A-8010 Graz(AT)**
Erfinder: **Jaeger, Kurt Edgar**
**Ravensberger-Strasse 9**
**D-5600 Wuppertal 1(DE)**
Erfinder: **Klein, Klausjörg, Chem.-Ing.**
**Richard-Strauss-Allee 33**
**D-5600 Wuppertal 2(DE)**
Erfinder: **Saatweber, Dietrich, Dr.Dipl.-Chem.**
**Forststrasse 22**
**D-5600 Wuppertal 2(DE)**

(74) Vertreter: **Türk, Gille, Hrabal, Leifert**
**Brucknerstrasse 20**
**D-40593 Düsseldorf (DE)**

EP 0 245 786 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein kathodisch abscheidbares wäßriges Elektrotauchlack-Überzugsmittel, das (A) ein oder mehrere Kunstharz-Bindemittel mit Aminogruppen enthält, welche durch Protonisieren mit Säuren wasserlöslich bzw. wasserdispergierbar gemacht werden können, beim Einbrennen damit reagierende Vernetzungsmittel (B) sowie (C) lösliche und/oder unlösliche Umesterungs-und/oder Veresterungskatalysatoren für die thermische Vernetzung bei Temperaturen über 100 °C, und das gegebenenfalls Pigmente, Korrosionsinhibitoren, Antikratermittel, Lackhilfsmittel, Katalysatoren und organische Lösungsmittel enthält.

Die Erfindung betrifft weiterhin die Verwendung eines solchen Überzugsmittels zur kathodischen Abscheidung aus einem Lackbad auf elektrisch leitende Oberflächen.

Aus der DE-A-27 07 405 und der DE-A-27 07 482 sind selbstvernetzende Bindemittel für kathodisch abscheidbare Elektrotauchlacke bekannt, die Aminogruppen enthaltende Reaktionsprodukte und/oder Polyadditionsprodukte sind, welche end- oder seitenständige Doppelbindungen tragen.

Gemäß DE-B-27 32 902 können derartige Reaktionsprodukte zusammen mit Urethanverbindungen als Bindemittel für kathodische Abscheidungen eingesetzt werden. Als Nachteile dieser Bindemittel sind der herstellungsbedingte, relativ hohe Gehalt an organischen Lösungsmitteln, die Entstehung von Oberflächenstörungen, die ungenügende Elastizität der Beschichtungen und Haftungsprobleme mit darauf aufgebrachten weiteren Beschichtungen zu nennen.

Aus der EP-B-66 859 sind Bindemittelsysteme bekannt, die bestehen aus

A) Gemischen oder Prekondensaten von Kunstharzen mit end- oder seitenständigen Doppelbindungen, primären und/oder sekundären Hydroxylgruppen und Aminogruppen,

B) Polyester mit ß-Hydroxyestergruppen als Umesterungs- und/oder Umamidierungshärter und

C) Umesterungskatalysatoren.

Ein Nachteil dieses Systems ist die Bildung von Spaltprodukten während des Einbrennvorgangs.

In der deutschen Patentanmeldung P 35 30 179.1-43 werden an Stelle der Polyester mit $\beta$-Hydroxyestergruppen spezielle Vernetzungsmittel genannt, die Michael-Additionsprodukte von zur Michael-Addition befähigten Mono- oder Dicarbonsäureester an Verbindungen sind, welche mindestens eine zur Michael-Addition befähigte Doppelbindung enthalten, und die pro Molekül im Mittel entweder zwei reaktionsfähige Estergruppen oder eine reaktionsfähige Estergruppe und eine ethylenische Doppelbindung enthalten. Während der Vernetzung werden ebenfalls Spaltprodukte gebildet.

Aus US-A-3,925,181 undUS-A-3,975,251 sind Kombinationen aus CED-Bindemitteln, welche primäre und/oder sekundäre Aminogruppen tragen, mit doppelbindunghaltigen Verbindungen bekannt. (CED ist eine international gebräuchliche Abkürzung für Cathodic Electro Deposition.) Die Vernetzungsreaktion ist hierbei eine Michael-Addition von reaktiven Aminen an Doppelbindungen. Der Nachteil liegt in der mangelnden Stabilität der CED-Bäder, da die Michael-Addition schon bei Raumtemperatur erfolgen kann. Durch vollständige Neutralisation der primären und sekundären Amine kann die Instabilität vermindert werden. Um eine gute Vernetzungsdichte zu erhalten, ist eine genügend große Menge an reaktiven Aminogruppen und damit eine entsprechend große Menge an neutralisierender Säure notwendig. Dadurch wird die zur Abscheidung notwendige Elektrizitätsmenge und die Gefahr der Filmbildungsstörung durch Gasblasen an der Kathode größer, während der erzielbare Umgriff (throwing power) sich verringert. Außerdem führt die Basizität der Beschichtung zu schlechteren Korrosionsschutzergebnissen, besonders nach mechanischer Beanspruchung wie durch Steinschlag. Die Haftung der nachfolgenden Beschichtungen, z.B. in der Automobilproduktion, wird durch die basische Grundierung stark beeinträchtigt.

Der vorliegenden Erfindung lag die Aufgabe zugrunde, die bekannten Nachteile weitgehend zu vermeiden und die Freibewitterungs- und Steinschlagresistenz besonders bei Einbrenntemperaturen zwischen 140 und 160 °C entscheidend zu verbessern.

Es wurde gefunden, daß dies möglich ist, wenn Überzugsmittel verwendet werden, die nachfolgend definierte Bindemittel und Katalysatoren enthalten.

Gegenstand der Erfindung ist ein kathodisch abscheidbares wäßriges Elektrotauchlack-Überzugsmittel, das

(A) ein oder mehrere Kunstharz-Bindemittel mit Aminogruppen enthält, welche durch Protonisieren mit Säuren wasserlöslich bzw. wasserdispergierbar gemacht werden können, beim Einbrennen damit reagierende Vernetzungsmittel (B) sowie (C) lösliche und/oder unlösliche Umesterungs- und/oder Veresterungskatalysatoren für die thermische Vernetzung bei Temperaturen über 100 °C, und das gegebenenfalls Pigmente, Korrosionsinhibitoren, Antikratermittel, Lackhilfsmittel, Katalysatoren und organische Lösungsmittel enthält, gekennzeichnet dadurch, daß es als Komponente (A) und (B) enthält

(A) 95 bis 5 % Massenanteil, bezogen auf den Gesamtanteil des Kunstharz-Bindemittels, von einem oder mehreren Polykondensations-, Polymerisations- und/oder Polyadditionsharzen, wobei das Harz oder im

Falle des Vorliegens mehrerer Harze deren Gemisch

a) eine zahlenmittlere Molmasse ($\overline{Mn}$) von 700 bis 10 000 hat,

b) 0 bis 21.7 • $10^{23}$ seiten- oder endständige Doppelbindungen pro 1 000 g enthält, entsprechend einer Hydrierjodzahl von 0 bis 90,

c) primäre Hydroxylgruppen enthält, entsprechend einer Hydroxylzahl 15 bis 300, und

d) tertiäre Aminogruppen entsprechend einer Aminzahl von 30 bis 150 aufweist,

(B) 5 bis 95 % Massenanteil, bezogen auf den Gesamtanteil des Kunstharz-Bindemittels, Polymerisations-, Polykondensations- und/oder Polyadditionsharze mit einer zahlenmittlere Molmasse ($\overline{Mn}$) von 170 bis 10 000 mit im Mittel mindestens 2 end- oder seitenständigen ethylenischen Doppelbindungen pro Molekül und weniger als einer endständigen, beim Einbrennen umesterungsfähigen Estergruppe pro Molekül.

Wegen des Fehlens oder zumindest des geringen Anteils von hydrolytisch spaltbaren Estergruppen ist das CED-Material der Erfindung sehr verseifungsstabil.
Durch fachmännische Herstellung der Komponenten (A) und (B) ist man in der Lage, die Vernetzungsreaktion während des Einbrennens ohne Emission von umweltschädlichen Spaltprodukten ablaufen zu lassen.

Die Komponenten (A), (B) und/oder (C) können sowohl als Gemische als auch als Prekondensate oder Prepolymere, d.h. durch Erwärmen der Mischungen, gegebenenfalls unter Inertgas, auf 40 bis 200 °C oder höher angewendet werden. Diese Prekodensat- oder Prepolymerbildung entspricht dem Stand der Technik und soll eine bessere Codeposition der verschiedenen Komponenten während des elektrischen Beschichtungsvorgangs herbeiführen. Das Erwärmen der Komponenten kann natürlich auch andere vorteilhafte Effekte bewirken, wie reineres Ultrafiltrat, bessere Dispergierung, glattere Filmoberfläche und bessere Haftungseigenschaften.

Bisher wurde vermutet, daß die Vernetzung der Elektrotauchlack-Bindemittel mit end- oder seitenständigen Doppelbindungen in Abwesenheit von herkömmlichen Vernetzungsmitteln allein "durch thermische Polymerisation der $\alpha,\beta$-ungesättigten Doppelbindungen" zustande kommt, wie in der DE-A- 27 07 405 geschrieben wird.

Es war daher nicht vorauszusehen, daß die Vernetzung durch die Gegenwart von höhermolekularen Polyolen mit primären Hydroxylgruppen speziell bei Anwendung von relativ niedrigen Einbrenntemperaturen (low bake) entscheidend erhöht wird. Außerdem war die nutzvolle Verwendung von Umesterungs-und Veresterungskatalysatoren für die thermische Vernetzung von Kunstharz-Bindemitteln, welche primäre oder sekundäre Hydroxylgruppen tragen, mit Vernetzungsmittel (B) nicht bekannt, zumal es sich bei der Vernetzungsreaktion weder um eine Umesterung noch um eine Veresterung handeln kann.

Die Bedeutung der primären Hydroxylgruppen für die Vernetzung mit der Vernetzungskomponente (B) wurde durch Versuche mit tert. Aminoacrylaten, welche primäre, sekundäre oder keine Hydroxylgruppen enthielten, bewiesen. In Anwesenheit des Harzes mit primären Hydroxylgruppen trat besonders bei niedrigen Einbrenntemperaturen die stärkste Vernetzung ein. Die sekundären Hydroxylgruppen führten bei niedrigeren Einbrenntemperaturen zu etwas geringerer Vernetzung, während mit hydroxylgruppenfreiem Harz selbst bei Einbrennbedingungen von 60 Minuten bei 180 °C praktisch keine Vernetzung festgestellt wurde.

Die Bindemittel der Komponente (A) sind bekannt und können z.B. nach Beispielen der EP-B-12 463, EP-A-40 867, EP-B-66 859 (Beispiele A1, A3 und A6). EP-A-137 459 und DE-A-34 36 346 (Beispiel A1 und A2) hergestellt werden. Vorteilhaft für die Zwischenhaftung (intercoat adhesion) ist ein Einbau von substituierten Harnstoffgruppen in Komponente (A) und/oder (B), wie sie z.B. durch Reaktion von Polyisocyanat oder verkapptem Polyisocyanat mit Mono- und Polyamin in das Bindemittelmolekül eingeführt werden können.

Das Bindemittel der Komponente (A) hat eine zahlenmittlere Molmasse ($\overline{Mn}$) von 700 bis 10 000, bevorzugt 1500 bis 5000. Es enthält mindestens eine tertiäre Aminogruppe pro Molekül.

Die untere Grenze der Aminzahl sollte bevorzugt 50, besonders bevorzugt 70, die obere Grenze dagegen sollte bevorzugt bei 120, besonders bevorzugt bei 100 liegen. Ist die Aminzahl zu niedrig, so ist die Löslichkeit zu gering oder es entstehen durch einen zu hohen Neutralisationsgrad zu saure pH-Werte in den Abscheidungsbädern. Ist die Aminzahl zu hoch, so entsteht eine schlecht haftende Filmbildung bei der Abscheidung oder eine blasige Oberfläche. Die Bindemittel der Komponente (A) können solche sein, die im wesentlichen keine Carboxylgruppen aufweisen.

Hydroxylgruppenhaltige Amin-epoxyharze werden zweckmäßig aus Polyglycidylethern mit mindestens zwei 1,2-Epoxidgruppen pro Molekül erhalten. Sie können hergestellt werden durch

a) Einführen von Glycidylgruppen in alkalischem Medium über z.B. Epichlorhydrin,

aa) in aliphatische, cycloaliphatische oder aromatische OH-funktionelle Harze, z.B. Epoxynovolake, unter Bildung von Polyglycidylethern,

ab) in aliphatische, cycloaliphatische oder aromatische COOH-funktionelle Harze unter Bildung von Polyglycidylestern, oder

ac) in aliphatische, cycloaliphatische oder aromatische $HN_2$-funktionelle Harze unter Bildung von Polyglycidylaminen,

b) Einpolymerisieren von ungesättigten Glycidylmonomeren wie Glycidyl(meth)acrylat, N-Glycidyl(meth)-acrylamid oder Allylglycidylether in Acrylcopolymerisate.

Besonders bevorzugt gemäß a) ist, daß die 1,2-epoxidgruppenhaltigen Harze Polyglycidylether der allgemeinen Formel sind

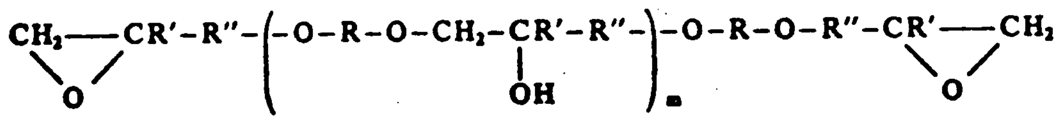

worin bedeuten

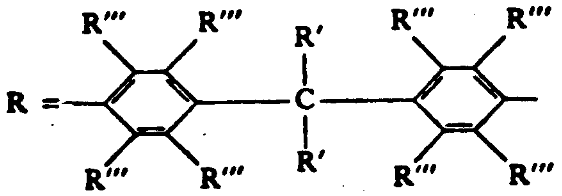

| | |
|---|---|
| $R'$ | = Wasserstoff oder $-C_nH_{2n+1}$ |
| $R''$ | = $-(CR'_2)_n-$ |
| $R'''$ | = $R'$ oder Halogen, bevorzugt Wasserstoff |
| m | = 0 bis 6 |
| n | = 1 bis 3 |

Sie haben ein mittleres ($\overline{Mn}$) von etwa 300 bis 2000 und ein Epoxidäquivalentgewicht von etwa 170 bis 1500. Solche Harze sind Umsetzungsprodukte von Epichlorhydrin mit Dioxi-diphenylmethan (Bisphenol F) oder Dioxi-diphenylpropan (Bisphenol A). Polyepoxide mit geeignetem Molekulargewicht werden entweder durch Auswahl der Reaktionsbedingungen bei der Umsetzung des Bisphenols mit Epichlorhydrin oder durch Umsetzung der monomeren Diglycidylverbindung mit weiterem Bisphenol oder mit langkettigen Polyalkoholen wie Hexandiol-1,6,Polytetrahydrofurandiol, Polycaprolactondiol, Polycaprolactamdiol oder Polybutadiendiol in Gegenwart von geeigneten basischen oder sauren Katalysatoren wie Borfluorid-Komplexen hergestellt. Es können auch entsprechende heterocyclische Polyepoxyverbindungen verwendet werden, wie 1,3-Diglycidyl-5,5-dimethylhydantioin, Triglycidylisocyanurat oder Diepoxyde aus Bisimiden.

Bevorzugt gemäß b) ist, daß die epoxygruppenhaltigen Harze Glycidyl(meth)acrylat-Copolymere sind, die durch Copolymerisation von Glycidylmethacrylat mit ungesättigten Monomeren erhalten wurden. Ungesättigte Monomere sind Styrol, Vinyltoluol, (Meth)acrylsäureester verschiedener Kettenlänge, wobei die Methacrylsäureester bevorzugt lineare oder verzweigte $C_1$- bis $C_4$-Alkohole und die Acrylsäureester bevorzugt lineare oder verzweigte $C_2$- bis $C_8$-Alkohole enthalten. Die Einführung der Aminogruppen kann entweder durch Copolymerisation mit ungesättigten Aminen wie Dialkyl-aminoalkyl(meth)acrylaten, entsprechenden Acrylamiden oder N-Vinylimidazol, oder durch Reaktion von vorzugsweise sekundären Aminen oder Aminoalkoholen mit den Epoxygruppen erfolgen.

Das Einführen der Aminogruppen in die Komponente (A) erfolgt entweder durch Addition von NH-reaktiven Verbindungen an die Epoxygruppe oder durch Umsetzung der Hydroxylgruppen des Grundharzes mit basischen Monoisocyanaten, die durch Reaktion von aromatischen und/oder aliphatischen und/oder cycloaliphatischen Di- oder Polyisocyanaten mit einem Dialkylaminoalkanol (vgl. DE-A-2 707 405) entstehen.

Als NH-reaktive Verbindungen werden verwendet primäre Monoalkylamine wie Dialkylaminoalkylamin und/oder bevorzugt sekundäre Monoamine wie Dialkylamine, Monoalkylhydroxyalkylamine oder Dihydroxyalkylamine. Beispiele für einsetzbare Verbindungen sind Diethylamin, Dimethylaminopropylamin, N-Methylaminoethanol oder Diethanolamin. Bei Verwendung von primären Aminen oder sekundären Diaminen tritt eine Kettenverlängerung ein, z.B. bei Einsatz von Additionsprodukten von Hexandiamin-1,6 mit 2 Mol Glycidylester der Versaticsäure. Als sekundäre Diamine, bevorzugt langkettige Diamine, können auch Alkyldiamino-alkane oder Umsetzungsprodukte von gesättigten Glycidylethern mit primären Diamino-alkanen verwendet werden. Die geeignete Hydroylgruppenzahl entsteht dabei einmal automatisch aus der Epoxygruppe bei der Addition der sekundären Aminogruppen, zum anderen kann sie durch Einsatz von Hydroxylalkylaminen gesteuert werden.

Die Molverhältnisse zwischen epoxid- und aminogruppenhaltigen Verbindungen sind so zu wählen, daß der vollständige Einbau des Amins gewährleistet ist, weil durchbruchartige Oberflächenstörungen beim elektrophoretischen Beschichten auftreten können, d.h. ein geringfügiger Überschuß an Epoxygruppen ist vorteilhaft. Die Reaktion der Amine beginnt schon bei Raumtemperatur und ist im allgemeinen exotherm. Um eine vollständige Umsetzung zu erreichen, ist es in der Regel notwendig, die Temperatur zeitweise auf etwa 50 bis 120°C zu erhöhen. Das 1,2-epoidgruppenhaltige Harz wird vor Zugabe des Amins in organischen Lösemitteln wie Xylol, Methylisobutylketon, die später vor dem Verdünnen abdestilliert werden müssen, oder in Lösemitteln wie Ethylenglykolmonoethylether, Propylenglykolmonoethylether, Diethylenglykoldimethylether oder Diacetonalkohol, die in Lösung bleiben können, gelöst. Zum Entfernen von Aminresten ist gegebenenfalls ein Dünnschichtverdampfer oder eine Wasserdampfdestillation geeignet.

Primäre Mono- und Polyamine werden in Gegenwart ausreichender Anzahl von Epoxidgruppen zu tertiären Aminen umgewandelt. Reichen die Epoxidgruppen nicht aus, können primäre und sekundäre Aminogruppen in der Komponente (A) verbleiben. Ein geringer Anteil von primären und sekundären Aminogruppen entsprechend einer Aminzahl unter 20, bevorzugt unter 10, wirkt in der Regel nicht störend. Höhere Anteile an reaktiven Aminogruppen können zu vorzeitiger Gelatinierung oder zumindest zu einer Verminderung der Stabilität führen.

Das Einführen von Doppelbindungen in die Komponente (A) kann gegebenenfalls erfolgen entweder direkt durch Addition an die Epoxygruppen oder indirekt durch Umsetzung der Hydroxylgruppe des Grundharzes mit ungesättigten Monoisocyanaten, die durch Reaktion von aromatischen und/oder aliphatischen und/oder cycloaliphatischen Di-oder Polyisocyanaten mit $\alpha,\beta$-ungesättigten Monocarbonsäuren oder entsprechenden Carbonsäureamiden, wie Hydroxyalkyl-(meth)-acrylaten oder Dicarbonsäureestern von Hydroxyalkyl(meth)-acrylaten erhalten werden, wie sie in der DE-A-2 707 482 beschrieben werden. Es werden dabei Verbindungen ausgewählt, die aufgrund ihrer Struktur im Molekülverband weitgehend thermisch stabile Urethangruppen ergeben. Die direkte Addition an die Epoxygruppe kann beispielsweise mit Diallylamin, ungesättigten Fettaminen oder auch ungesättigten Fettsäuren erfolgen.

Als Kettenverlängerungsmittel können ungesättigte Dicarbonsäuren wie Fumarsäure oder dimerisierte Fettsäure oder auch Addukte von ungesättigten Monoepoxyverbindungen an Di- oder Polyaminen mit mindestens zwei primären Aminogruppen oder mindestens einer primären und einer sekundären Aminogruppe verwendet werden, wie Hexandiamin-1,6, 3-Aminomethylaminopropylamin, Diethylentriamin, Trimethylhexamethylendiamin und Isophorondiamin, entsprechend der Formel

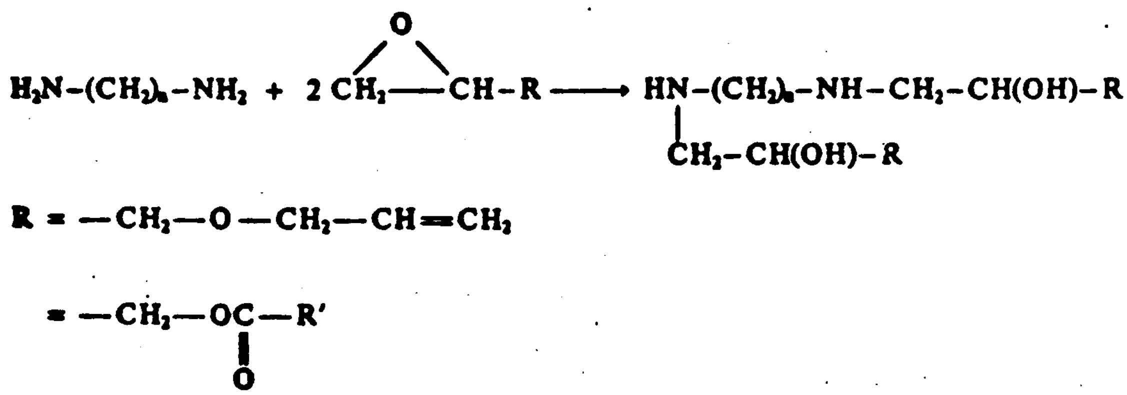

R' = ungesättigter Kohlenwasserstoffrest von Fettsäuren

Als ungesättigte Monoepoxyverbindungen können dabei verwendet werden:

a) Glycidylester von linearen oder verzweigten, isoliert oder konjugiert ungesättigten $C_3$- bis $C_{18}$-Monocarbonsäuren,

b) Glycidylether von linearen oder verzweigten, isoliert oder konjugiert ungesättigten $C_3$- bis $C_{18}$-Monoalkoholen.

Die Aminogruppen der Polyamine werden dabei etwa stöchiometrisch mit so viel ungesättigten Monoepoxid-Verbindungen bei Temperaturen von etwa 50 bis 105°C umgesetzt, daß ein Molekül mit zwei reaktiven sekundären Aminogruppen entsteht, das als Kettenverlängerungsmittel mit weiterem Polyepoxid reagiert. Beispiele sind die Umsetzungsprodukte von einem Mol Glycidylallylether mit Aminoethylethanolamin oder von zwei Mol Linolglycidylester mit Ethylendiamin. Bei Verwendung von drei reaktiven Stellen werden Verzweigungen eingebaut. Eine Kettenverlängerung kann auch durch Einbau von ungesättigt substituierten primären Aminen wie primäres Allylamin erfolgen.

Eine andere Herstellungsweise ist die Umetherung mit einem veretherten methylolierten (Methyl)-acrylamid, z.B. Methylolacrylamidmonobutylether, wie sie in der DE-A-2 934 467 beschrieben ist. Die Einführung ungesättigter Doppelbindungen kann auch auf gleiche Weise durch Umsetzung mit ungesättigten Formaldehyd-Kondensationsharzen wie Phenolplasten oder Aminoplasten erreicht werden. Geeignete Phenolharze sind z.B. Reaktionsprodukte von ein und/oder mehrkernigen, gegebenenfalls alkylsubstituierten Phenolen mit Formaldehyd oder Formaldehyd liefernden Verbindungen wie Paraformaldehyd. Die Methylolgruppen können teilweise oder voll verethert sein mit Methanol, Ethanol, Propanol, Butanol und/oder ungesättigten Monoalkoholen wie Allylalkohol, Hydroxyalkyl(meth)acrylaten oder Oleylalkohol. Veretherte Phenolharze können auch durch Reaktion mit ungesättigten Monoepoxiden wie Glycidylallylethern oder Glycidylmethylacrylat hergestellt werden. Eine weitere Modifizierung ermöglicht die Umsetzung mit ungesättigten Monocarbonsäuren wie (Meth)acrylsäure, Maleinsäure- oder Fumarsäuremonoestern oder ungesättigte Fettsäuren wie Oleinsäure, Linolsäure, Linolensäure oder ihren natürlichen Mischungen. Besonders geeignet sind niedrigmolekulare ungesättigte Phenolether wie die Polymethylolverbindungen von Phenolallylether (Methylonharz® 75 108 der General Electric). Ungesättigte Aminoplaste können durch Reaktion der methylolierten Melamin-, Benzoguanamin- oder Harnstoffharze mit ungesättigten Monoalkoholen oder Monocarbonsäuren erhalten werden.

Besonders bevorzugte Ausgangsstoffe für Bindemittel der Komponente (A) sind Reaktionsprodukte aus Bisphenol A, Bisphenol F und/oder Novolaken mit Epichlorhydrin. Unter Novolake sind Reaktionsprodukte aus Phenolen mit Aldehyd zu verstehen, wie sie in "Lackkunstharze" von H. Wagner und H.F. Sarx, Carl Hanser Verlag, München 1959, auf den Seiten 42, 45 und 46 beschrieben werden, wobei statt Phenol auch geeignete Homologe und Derivate des Phenols zur Herstellung von Novolaken verwendbar sind.

Die Komponente (A) enthält primäre Hydroxylgruppen, entsprechend einer Hydroxylzahlvon 15 bis 300, bevorzugt 20 bis 180. Bei der Reaktion von sekundären und primären Aminen mit 1,2-Epoxidgruppen entstehen im wesentlichen sekundäre Hydroxylgruppen. Primäre Hydroxylgruppen können z.B. in die Komponente (A) durch Verwendung von primäre Hydroxylgruppen enthaltenden Alkanolaminen, wie Diethanolamin, eingeführt werden.

Eine weitere Möglichkeit zur Herstellung von CED-Bindemitteln mit primären Hydroxylgruppen ist die, gegebenenfalls partielle, Umsetzung von Epoxidgruppen eines Epoxidharzes mit Polyolen, wie Diolen, Triolen usw., z.B. mit Polycaprolactondiol, und Einführung von tertiären Aminogruppen in bekannter Weise.

(Meth)acrylatharze mit primären Hydroxylgruppen können durch Mitverwendung von Monomeren mit primären Hydroxylgruppen, z.B. von Hydroxy(meth)acrylat, hergestellt werden. Durch gleichzeitiges Einpolymerisieren von ungesättigten Glycidylmonomeren werden 1,2-Epoxidgruppen eigneführt, die mit Aminen in bekannter Weise umgesetzt werden. Die Pfropfpolymerisation von (Meth)acrylatmonomeren an Aminoepoxidharze, welche end- oder seitenständige Doppelbindungen enthalten, kann bei Mitverwendung von z.B. Hydroxyethyl(meth)acrylat ebenfalls zu CED-Bindemitteln für die Komponente (A) führen.

Polykondensationsharze mit primären Hydroxylgruppen sind herstellbar aus reaktiven Polyaminoamidharzen, wie sie im "Lehrbuch der Lacke und Beschichtungen" von H. Kittel, Verlag W.A. Colomb in der Heenemann GmbH Stuttgart-Berlin, Band I, Teil 1, 1971, Seite 509 bis 511, beschrieben werden, durch Umsetzung mit primäre Hydroxylgruppen enthaltenden 1,2-Epoxidverbindungen, wie Glycidol (2,3-Epoxy-1-propanol).

Die Komponente (B), welche zur Vernetzung mit Komponente (A) verwendet wird, hat eine zahlenmittlere Molmasse ($\overline{Mn}$) von 170 bis 10 000, bevorzugt 250 bis 6000. Sie muß pro Molekül im Mittel mindestens zwei end- oder seitenständige reaktive Doppelbindungen tragen. Die von den Doppelbindungen ausgehende Reaktion soll so schnell ablaufen, daß eine ausreichende Vernetzung bei Einbrenntemperaturen von 140 bis 160 °C oder niedriger liegt. Besonders gut eignen sich hierfür Doppelbindungen von Acryl- und Methacrylgruppen.

Als Komponente (B) können geeignete Acrylsäureverbindungen verwendet werden, wie Ethylenglykoldiacrylat, 1,3-Butylenglykoldiacrylat, Bisphenol-A-diacrylat, Diethylenglykol-diacrylat,Triethylenglykoldiacrylat, Teraethylenglykoldiacrylat, 1,6-Hexandioldiacrylat, Polyethylenglykoldiacrylat, Trimethylolpropandiacrylat, Trimethylolpropantriacrylat, Pentaerythritdiacrylat, Pentraerythrittriacrylat, Pentaerythrittetraacrylat und Melaminacrylat sowie die entsprechenden Methacrylsäureverbindungen.

Eine andere Möglichkeit liegt in der Verwendung von Methacrylamid- oder von Acrylamidverbindungen, welche z.B. nach Reaktion der Amide mit Formaldehyd, und gegebenenfalls nach Veretherung der entstandenen Methylolgruppen, an Verbindungen und Harze mit entsprechenden funktionellen Gruppen, z.B. Hydroxylgruppen, nach bekannten Methoden ankondensiert werden. Eine weitere Möglichkeit zur Herstellung der Komponente (B) besteht in der Reaktion von Glycidylacrylat oder Glycidylmethacrylat mit Carboxylgruppen tragenden Verbindungen oder Harzen. Da auf diese Weise $\beta$-Hydroxyestergruppen entstehen, muß sichergestellt werden, daß während des Einbrennens keine Spaltprodukte durch Umesterung entstehen. Werden die ungesättigten Glycidylverbindungen mit Verbindungen oder Harzen, welche primäre oder sekundäre Aminogruppen tragen, umgesetzt, ist das Risiko einer Spaltproduktbildung wesentlich geringer.

Die Komponente (B) kann auch durch Umesterung von Estern und Polyestern oder durch Reaktion von Diisocyanaten, Isocyanatgruppen tragenden Prepolymeren, Prekondensaten und Kunstharzen mit Hydroxyalkyl(meth-)acrylat, z.B. durch Reaktion des Reaktionsproduktes aus 1 mol Trimethylolpropan und 3 mol Toluylendiisocyanat mit 3 mol 2-Hydroxyethylacrylat, hergestellt werden.

Die Komponente (B) kann gegebenenfalls tertiäre Aminogruppen tragen, damit eine bessere Dispergierung in Wasser erreicht wird. Die Menge an tertiären Aminogruppen muß in solchen Fällen so groß oder so klein sein, daß die Codeposition mit Komponente (A) gewährleistet ist.

Es ist natürlich auch möglich, Doppelbindungen enthaltende Gruppen, z.B. die Acrylgruppe, direkt in das Kunstharzmolekül der Komponente (A) einzuführen, wodurch in gewissem Umfang selbsthärtende CED-Bindemittel entstehen. Vorteilhaft ist es jedoch, die Komponente (B) als reaktive Verdünnerkomponente dem System zuzumischen, wodurch CED-Beschichtungen mit höherer Schichtdicke (30 bis 50 $\mu$m) und hervorragendem Umgriff (throwing power) erhalten werden.

Für eine Vernetzung ohne Entstehung von Spaltprodukten ist es zweckmäßig, daß die Komponente (B) pro Molekül im Mittel weniger als eine endständige, beim Einbrennen umesterungsfähige Estergruppe, bevorzugt weniger als 0.5, besonders bevorzugt im wesentlichen keine endständigen, beim Einbrennen umesterungsfähigen Estergruppen enthält. Unter dem Begriff "im wesentlichen" wird verstanden, daß praktisch alle derartigen Gruppen nicht vorliegen, wobei jedoch bei hochmolekularen Produkten der vorliegenden Art es immer möglich ist, daß ein sehr geringer Gehalt an solchen Gruppen vorliegt.

Zusätzlich zu den Vernetzungsmitteln der Komponente (B) können noch andere Vernetzungsmittel, die für kathodisch abscheidbare Systeme brauchbar sind, wie blockierte Polyisocyanate, $\beta$-Hydroxyester, Melaminharze, Phenolharze, Phenolallylether-Formaldehyd-Harze, verwendet werden. Dadurch ist es möglich, ohne wesentliche Verschlechterung der Reaktivität gewisse Eigenschaften zu verbessern, z.B. Pigmentbenetzung und Aussehen der Filmoberfläche.

Durch geeignete Wahl von Bindemitteln der Komponente (A) mit mehr oder weniger reaktiven Hydroxylgruppen und Vernetzungsmitteln mit Acryl-oder Methacrylgruppen ist es möglich, optimale Verlaufseigenschaften einzustellen und eine hervorragende Badstabilität zu erreichen.

Das Massenverhältnis der Komponente (A) zu Komponente (B) beträgt 95 bis 5 % Komponente (A) zu 5 bis 95 % Komponente (B), bevorzugt 95 bis 40 % Komponente (A) zu 5 bis 60 % Komponente (B).

Als Vernetzungskatalysatoren, Komponente (C), eignen sich Umesterungs-und Veresterungskatalysatoren. Die optimale Menge muß für jeden Katalysator oder für jedes Katalysatorgemisch mit dem zur Anwendung kommenden Bindemittel oder Bindemittelgemisch speziell ermittelt werden. Im allgemeinen werden 0.1 bis 10 %, bevorzugt 1 bis 6 % Metall, bezogen auf Gesamtanteil Komponente (A) und Komponente (B), in Form der Metalloxide, Metallsalze und/oder Metallkomplexverbindungen, z.B. Chelate, von ein- oder mehrwertigen Metallen verwendet.

Beispiele für geeignete Katalysatoren sind Bleioctoat, Bleisilikat, Bleinaphthenat, Zinkverbindungen nach DE-C-28 07 698, z.B. Alcophor ® 827 von Henkel, und DE-A- -33 06 064, Zink- und Zink-Bleiverbindungen der Nitrophthalsäure (Sicorin® der BASF), Komplexverbindungen aus Zinkoxid und 8-Hydroxychinolin (auch "in situ" anwendbar), Antimontrioxid, Kobaltnaphthenat, Cadmium-acetyl-acetonat, Thallium-dicyclopentadien, Triethanolamin-titanat oder organische Verbindungen des Zinns, z.B. Dibutylzinndilaurat und Swedcat 5 ® von Swedstab AB, Schweden.

Wasserlösliche Metallverbindungen sind ebenfalls geeignet, wenn das Metall als Verbindung oder Komplex in fein verteilter Form mit dem Lack abgeschieden wird.

Die Metalloxide, Metallsalze oder Metallkomplexverbindungen können lediglich kalt zugemischt oder mit den Bindemitteln auf 40 bis 250 °C, gegebenenfalls unter Inertgas, erwärmt werden.

Für die Wirkung von Octoaten und Naphthenaten kann es vorteilhaft sein, die in den Handelsprodukten enthaltenen Lösungsmittel, z.B. aliphatische und aromatische Kohlenwasserstoffe, abzudampfen und die Metallverbindungen in vorwiegend wasserverdünnbaren Lösungsmitteln, die gut mit dem Bindemittel oder Bindemittelgemisch verträglich sind, zuzugeben.

Eine vorteilhafte Einarbeitung des Katalysators in das CED-Material ist die Zugabe von speziellen Metalloxiden, z.B. Blei-II-oxid, bei der Vermahlung der Pigmente und Füllstoffe (extender), zumal der Säureanteil zur Stabilisierung des Gesamtsystems durch diese Maßnahme deutlich verringert wird.

Katalysatoren, welche die Michael-Addition beschleunigen, sind auch für dieses erfindungsgemäße Elektrotauchlack-Überzugsmittel verwendbar, wenn sie sich ohne Nachteile in das System einfügen.

Durch Protonisieren mit den bekannten Säuren wird das kationische Bindemittel in an sich bekannter Weise wasserdispergierbar gemacht.

Für das erfindungsgemäße Elektrotauchlack-Überzugsmittel können alle für CED verwendbaren Pigmente benutzt werden. Unter den Begriff "Pigmente" fallen hierzu auch die Füllstoffe (extender), Aluminiumbronzen und dergleichen. Die Verwendbarkeit eines Pigmentes hängt nicht von seiner Wanderungsrichtung im elektrischen Feld ab, da der Abscheidungsvorgang bei der Elektrotauchlackierung durch die Koagulation des ED-Bindemittels ausgelöst wird, wie in den Fachaufsätzen "Zum Mechanismus der elektrophoretischen Lackierung" von Dr. Fritz Beck, Farbe und Lack, 72. Jahrgang, Nr. 3, 1966, Seite 218 bis 224 und "Betrachtungen und Versuche zur Elektrotauchlackierung" von Dr. F. Beck, Dr. H. Pohlemann und Dr. H. Spoor, Farbe und Lack, 73. Jahrgang, Nr. 4/1967, Seite 298 bis 310 zu lesen ist. Nichtionische Bindemittel wie z.B. Weichmacher (Dibutylphthalat und andere Phthalsäureester), Weichmacherharze, Cumaron-Inden- Harze, Inden-Harze, Kohlenwasserstoffharze und die entsprechenden Öle (z.B. Cumaron-Inden-Öl) können, soweit sie sich über Erst- und Nachfüllmaterial in das CED-Bad einemulgieren lassen, zur Verbesserung spezieller Eigenschaften zugesetzt werden.

Zusatzstoffe wie Verlaufmittel, Antikratermittel, Antischaummittel, Lösungsmittel usw. können in bekannter Art und Weise ausgewählt und zugesetzt werden.

Die metallisch leitenden Werkstücke werden in bekannter Weise mit dem erfindungsgemäßen Elektrotauchlack-Überzugsmittel kathodisch beschichtet und bevorzugt bei Temperaturen von 130 bis 170 °C über einen Zeitraum von 15 bis 60 Minuten eingebrannt. Selbstverständlich führt die Anwendung höherer Temperaturen, z.B. 170 bis 210 °C auch zu guten Ergebnissen.

In Fällen, in welchen im Bad während der Herstellung oder später gröbere Teilchen entstehen, kann es vorteilhaft sein, wenn eine Ultraschallbehandlung nach DE-C-31 13 881 durchgeführt wird. Es gelingt mit diesem Verfahren, welches für Electro-Powder-Coating anwendet wird, oft sogar sehr schwer dispergierbare Teilchen, welche als Sieb- und Filterrückstände anfallen würden, im ED-Bad zu dispergieren. Um den zur Stabilisierung des CED-Bades notendigen Säureanteils wünschenswert gering zu halten, wird eine minimale Säuremenge zugegeben und das Bad anschließend zur Verbesserung des Dispergierzustandes ultrabeschallt.

## Beispiele

Alle Angaben in Prozent (%) bedeuten Massenanteile, soweit nichts anderes gesagt.

### CED-Bindemittel A1

Gemäß EP-B-12 463 werden 301 g Diethanolamin, 189 g 3-(N,N-dimethylamino)propylamin und 1147 g eines Adduktes aus 2 mol Hexandiamin-1,6 und 4 mol Glycidylester der Versaticsäure (Cardura® E 10 von Shell) zu 5273 g Bishpenol A- Epoxidharz (Epoxidäquivalentgewicht 475) in 3000 g Ethoxypropanol gegeben.

Das Reaktionsgemisch wird 4 Stunden unter Rühren bei 85 bis 90 °C und dann eine Stunde bei 120 °C gehalten.

Anschließend wird mit Ethoxypropanol auf 60 % Festkörper verdünnt.

Kennzahlen:
Festkörpergehalt: 60 %
Hydroxylzahl: 276 mg KOH/g Festharz
Hydroxylzahl,
bezogen auf primäre Hydroxylgruppen: 55mg KOH/G Festharz
Hydrierjodzahl: praktisch 0
Aminzahl,
bezogen auf tertiäre Aminogruppen: 78 mg KOH/g Festharz

### CED-Bindemittel A2

3120 g Bindemittellösung werden gemäß DE-B-27 32 902, Spalte 9, Beispiel A2, aus 706 g Bisphenol A-Epoxidharz (Epoxidäquivalentgewicht 260), 631 g EGA (Ethylglykolacetat, Monoethylenglykolmonoethylether), 0.25 g Hydrochinon, 765 g Halbester aus Tetrahydrophthalsäureanhydrid und Hydroxyethylmethacrylat, und 1017 g einer 70 %-igen Lösung eines Monoisocyanats aus Toluylendiisocyanat und Dimethylethanolamin in EGA hergestellt und mit 1930 g CED-Bindemittel A1 gemischt.

Kennzahlen des Gemisches:
Festkörpergehalt: 66.2 %
Hydroxylzahl: 158 mg KOH/g Festharz

Hydroxylzahl,
bezogen auf primäre Hydroxylgruppen: 22 mg KOH/ g Festharz
Hydrierjodzahl des Festharzes: 18
Aminzahl,
bezogen auf tertiäre Aminogruppen: 74 mg KOH/ g Festharz

Vernetzungsmittel B1

875 g der Lösung eines Adduktes aus 2,4-Toluylendiisocyanat und Trimethylolpropan (Molverhältnis 3:1), 75 %-ig in Ethylacetat (Desmodur® L/75), wird mit Xylol auf 50 % Festkörpergehalt verdünnt und mit 0,25 g Hydrochinon versetzt.
Nach Zugabe von 348 g Hydroxyethylacrylat wird das Reaktionsgemisch unter Rückflußkühlung etwa 3 Stunden erhitzt, bis der NCO-Wert praktisch auf Null gesunken ist. Danach wird Ethylacetat fraktioniert abdestilliert, wobei die Temperatur des Reaktionsgutes, gegebenenfalls durch Anlegen eines Vakuums, nicht über 100 ° C steigen darf, bis ein Festkörpergehalt von 75 % erreicht wird.
Anschließend wird mit Methylisobutylketon auf 70 % Festkörpergehalt verdünnt.
Festkörpergehalt: 70 %
Mittlere Molmasse ($\overline{Mn}$): 1004
Das Vernetzungsmittel hat im Mittel pro Molekül 3 endständige Doppelbindungen und keine endständigen oder seitenständigen β-Hydroxyestergruppen.

Vernetzungsmittel B2

Gemäß DE-C-27 07 482 wird, wie unter "Beispiele 1 bis 12" beschrieben, ein Kunstharz hergestellt aus 950 g Bisphenol A-Epoxidharz (Epoxidäquivalentgewicht 450 bis 500), 500 g EGA, 210 g Diethanolamin, 1129 g Monoisocyanatvorprodukt aus 452 g Toluylendiisocyanat, 338 g Hydroxyethylmethacrylat und 339 g EGA.
Das Reaktionsprodukt wird mit Ethoxypropanol auf 60 % Festkörpergehalt verdünnt.
Festkörpergehalt: 60 %
Mittlere Molmasse ($\overline{Mn}$): 1950
Das Vernetzungsmittel enthält pro Molekül im Mittel 2.6 end- oder seitenständige Doppelbindungen und keine endständigen oder seitenständigen β-Hydroxyestergruppen.

Vernetzungsmittel B3

Herstellung wie Vernetzungsmittel B2 mit Hydroxypropylacrylat statt Hydroxyethylmethacrylat, Kenndaten wie B2.

Vernetzungsmittel B4

Aus 120 g Ethylacrylat, 250 g Methylacrylat, 250 g n-Butylacrylat, 250 g Styrol und 180 g Acrylsäure wird in 695 g EGA unter Verwendung von 20 g Azodiisobuttersäurenitril und 20 g tert. Dodecylmercaptan ein Copolymerisat in bekannter Weise hergestellt, welches bei 110 ° C nach Zugabe von 0,2 g Hydrochinon und 355 g Glycidylmethacrylat bis zu einer Säurezahl unter 5 mg KOH/g Festharz umgesetzt wird.
Festkörpergehalt: 65 %.
Mittlere Molmasse ($\overline{Mn}$): 3500
Das Vernetzungsmittel hat im Mittel pro Molekül mehr als 2 end-oder seidenständige Doppelbindungen und keine end- oder seitenständigen β-Hydroxyestergruppen.

Vernetzungsmittel B5

485 g Dimethylterephthalat und 555 g Neopentylglykol werden auf 200 ° C erwärmt und bei dieser Temperatur gehalten, bis die theoretische Methanolmenge abdestilliert ist. Nach Zugabe von 645 g Adipinsäure wird bei 190 ° C bis zu einer Säurezahl von 131 mg KOH/g verestert. Das Reaktionsprodukt wird anschließend mit 401 g Trishydroymethylaminomethan bis zu einer Säurezahl von weniger als 1 mg KOH/g umgesetzt. Der Polyester wird mit EGA auf 70 % Festkörper verdünnt.

1430 g der 70 %-igen Lösung des Hydroxylgruppen tragenden Polyesters werden mit 1300 g Monoisocyanatvorprodukt aus 522 g Toluylendiisocyanat, 390 g Hydroxypropylacrylat und 388 g EGA bei

65 °C bis zu einem NCO-Wert von praktisch 0 umgesetzt.
Festkörpergehalt: 70 %
Mittlere Molmässe ($\overline{Mn}$): 1800
Das Vernetzungsmittel hat im Mittel pro Molekül mehr als 2 end- oder seitenständige Doppelbindungen und keine end- oder seitenständige $\beta$-Hydroxylgruppen.

Beispiel 1

Zu 743 g CED-Bindemittel A1 werden unter gutem Rühren 116 g Vernetzungsmittel B1 , 3,5 g Bleioctoat (31 % Pb), 30 g Eisessig (98 bis 100 %) und 4507 g voll entsalztes Wasser zugegeben. Aus dem CED-Bad, das einen Festkörpergehalt von 10 % aufweist, werden Lackfilme kathodisch auf Stahlblech abgeschieden und 30 Minuten bei 160 °C eingebrannt. Die eingebrannten Lackfilme mit einer Schichtdicke von 16 bis 18 µm sind zähelastisch und glatt.
Das Ergebnis der MEK-Beständigkeitsprüfung ist in Tabelle 1 angegeben.

Beispiel 2

505 g CED-Bindemittel A2 werden unter gutem Rühren mit 50 g Ethoxypropanol, 6 g Bleigätte (Blei-II-oxid), 20 g Bleisilikat, 2.4 g Ruß und 235 g Titandioxid möglichst homogen vermischt und auf einer Perlmühle vermahlen.

Mit 273 g CED-Bindemittel A2, 161 g Vernetzungsmittel B1, 50 g Phenoxypropanol und 31 g Ameisensäure, 50 %-ig in Wasser, wird der Ansatz komplettiert.
Anschließend wird mit 4067 g voll entsalztem Wasser ein CED-Bad hergestellt. Nach zwei bis drei Tage offenem Rühren werden Lackfilme auf Stahlblech kathodisch abgeschieden und 40 Minuten bei 160 °C eingebrannt. Die Trockenfilmschichtdicke beträgt 19 bis 21 µm. Das Prüfungsergebnis der MEK-Beständigkeit ist in Tabelle 1 angegeben.

Beispiel 3

Ähnlich wie in Beispiel 2 wird ein CED-Bad hergestellt aus 380 g CED-Bindemittel A1, 2 g 2,2,4-Trimethylpentan-1,3-diolmonoisobutyrat, 9 g Bleioctoat (31 % Pb), 13.4 g Bleisilikat, 1.6 g Ruß, 169 g Titandioxid, 28 g Aluminiumsilikat, 25 g Ethoxypropanol, 103 g CED-Bindemittel A1, 103 g Trimethylolpropantriacrylat (Komponente B), 17 g Ameisensäure, 50 %-ig in Wasser, und 2450 g voll entsalztem Wasser.
Festkörpergehalt: 18 %     pH-Wert: 5.8
MEQ-Wert = 37 mmol Säure/ 100 g Festkörper Leitfähigkeit: 1570 $\mu S.cm^{-1}$ Bei 30 °C Badtemperatur und 250 bis 300 V Beschichtungspannung werden zinkphospatierte und nicht vorbehandelte Stahlbleche kathodisch beschichtet. Die Testergebnisse der 30 Minuten bei 160 °C eingebrannten Beschichtungen mit 39 bis 41 µm Trockenfilmschichtdicke sind in Tabelle 1 zusammengefaßt.

Beispiel 4

Wie im Beispiel 2 beschrieben, wird ein CED-Bad hergestellt aus 283 g CED- Bindemittel A1, 182 g CED-Bindemittel A2, 50 g Phenoxypropanol, 16.3 g Bleisilikat, 152 g Titandioxid, 1.7 g Ruß, 212 g Vernetzungsmittel B2, 15 g Eisessig (98 bis 100 %-ig) und 2391 g voll entsalztem Wasser.

Die kathodisch auf zinkphosphatierten Stahlblechen abgeschiedenen Beschichtungen sind nach 30 Minuten 155 °C Einbrennen bei einer Schichtdicke von 21 bis 23 µm glatt und zäheleastisch. Die Testergebnisse sind in Tabelle 1 zusammengestellt.

Beispiel 5

Herstellung des CED-Bades wie in Beispiel 4, aber mit Vernetzungsmittel B3 statt B2.
Die kathodisch abgeschiedenen Lackfilme auf zinkphosphatierten Stahlblechen sind nach 30 Minuten Einbrennen bei 150 °C mit Schichtdicke 25 µm glatt und zäheleastisch.
Die Prüfergebnisse sind in Tabelle 1 zusammengefaßt.

Beispiel 6

Herstellung des CED-Bades wie in Beispiel 5, aber mit 30 g Zinkcyanurat statt 16.3 g Bleisilikat.
Die auf Stahlblech kathodisch abgeschiedenen Lackfilme sind nach 60 Minuten Einbrennen bei 160 °C mit einer Schichtdicke von 20 µm glatt und zähelastisch.

Beispiel 7

Die Lösungsmittel eines handelsüblichen Bleioctoats werden mit Hilfe eines Rotationsverdampfers abdestilliert, bis ein Produkt mit 95 % Festkörper zurückbleibt.
8.8 g des 95 %-igen Bleioctoates (41 % Pb) werden zu 350 g CED-Bindemittel A1 und 30 g Phenoxypropanol gegeben und gut vermischt. Nach weiterer Zugabe von 138 g Vernetzungsmittel B4, 8.3 g Eisessig (98 bis 100 %) und 2473 g voll entsalztem Wasser entsteht ein CED-Bad mit 10 % Festkörpergehalt.
Die kathodisch auf Stahlblech abgeschiedenen Lackfilme sind nach 60 Minuten Einbrennen bei 60 °C glatt und zäheleastisch.
Die Schichtdicke beträgt 17 µm.

Beispiel 8

Herstellung wie im Beispiel 7, aber mit 128 g Vernetzungsmittel B5 statt 138 g Vernetzungsmittel B4.
Die auf gleiche Weise beschichteten Lackfilme werden den gleichen Bedingungen wie in Beispiel 7 unterworfen und führen zu ähnlichen Ergebnissen.

T A B E L L E 1

Prüfung der Beschichtungen

| Beispiel | MEK-Rubs 1) | Härte 2) | Tiefung 3) | Unterwanderung 4) ST 5) | Unterwanderung 4) ZP 6) |
|---|---|---|---|---|---|
| 1 | 100 | 169 | 6.4 | | |
| 2 | 100 | 181 | 7.1 | | |
| 3 | | 161 | 7.2 | 1.0 | 0.3 |
| 4 | | 193 | 5.9 | | 0.5 |
| 5 | | 190 | 6.4 | | 0.4 |
| 6 | | 165 | 5.6 | | 0.7 |

1) Anzahl der durchgeführten Doppelhübe bis zu einem sichtbaren Angriff des Films bei einer unter 1 kg Belastung durchgeführten Einwirkung von mit Methylethylketon getränkter Watte

2) Pendelhärte nach König DIN 53 157 (sec)

3) Tiefung nach Erichsen DIN 53 156 (mm)

4) Salzsprühtestergebnisse nach DIN 50 021 und 53 167

5) Nicht vorbehandelter Stahl (360 Stunden Salzsprühnebelprüfung)

6) Zinkphosphatierter Stahl (504 Stunden Salzsprühnebelprüfung)

## Patentansprüche

**1.** Verwendung von löslichen und/oder unlöslichen Umesterungs- und/oder Veresterungskatalysatoren, für die thermische Vernetzung bei Temperaturen über 100 °C, von kathodisch abscheidbaren wäßrigen Elektrotauchlack-Überzugsmitteln, die

(A) ein oder mehrere Polykondensations-, Polymerisations- und/oder Polyadditionsharze, wobei das Harz oder im Falle des Vorliegens mehrerer Harze deren Gemisch

a) eine zahlenmittlere Molmasse ($\overline{Mn}$) von 700 bis 10 000 hat,

b) 0 bis 21.7 • $10^{23}$ seiten- oder endständige Doppelbindungen pro 1 000 g enthält, entsprechend einer Hydrierjodzahl von 0 bis 90,

c) primäre Hydroxylgruppen enthält, entsprechend einer Hydroxylzahl 15 bis 300, und

d) tertiäre Aminogruppen entsprechend einer Aminzahl von 30 bis 150 aufweist, und

(B) Polymerisations-, Polykondensations- und/oder Polyadditionsharze mit einer zahlenmittleren Molmasse ($\overline{Mn}$) von 170 bis 10 000 mit im Mittel mindestens 2 Gruppen der allgemeinen Formel

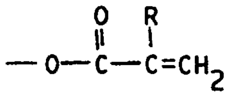

I

worin R für Wasserstoff oder die Methylgruppe steht, pro Molekül und weniger als einer endständigen, beim Einbrennen umesterungsfähigen Estergruppe pro Molekül,

und gegebenenfalls Pigmente, Korrosionsinhibitoren, Antikratermittel, Lackhilfsmittel, Katalysatoren und organische Lösungsmittel enthalten, wobei das Massenverhältnis der Komponente (A) zur Komponente (B) 95 bis 5 % zu 5 bis 95 % beträgt.

**2.** Verwendung nach Anspruch 1, dadurch gekennzeichnet, daß die Komponente (B) im Mittel weniger als 0.5 endständige beim Einbrennen umesterungsfähige Estergruppen pro Molekül enthält.

**3.** Verwendung nach Anspruch 2, dadurch gekennzeichnet, daß die Komponente (B) im wesentlichen keine endständigen, beim Einbrennen umesterungsfähige Estergruppen enthält.

**Claims**

**1.** Use of soluble and/or insoluble transesterification and/or esterification catalysts for thermal crosslinking at temperatures over 100 °C of cathodically depositable aqueous electrocoating compositions which contain

(A) one or more polycondensation, polymerisation and/or polyaddition resins, wherein the resin, or in the presence of more than one resin, the mixture thereof

a) has a number average molar weight (Mn) of 700 to 10 000,

b) contains 0 to 21.7 . $10^{23}$ lateral or terminal double bonds per 1 000 g, corresponding to a hydrogenation iodine value of 0 to 90,

c) contains primary hydroxyl groups, corresponding to a hydroxyl value of 15 to 300, and

d) has tertiary amino groups corresponding to an amine value of 30 to 150, and

(B) polymerisation, polycondensation and/or polyaddition resins with a number average molar mass (Mn) of 170 to 10 000 with on average at least 2 groups of the general formula

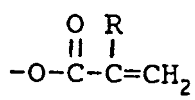

I

wherein R stands for hydrogen or the methyl group, per molecule and less than one terminal ester group capable of transesterification on baking per molecule,

and optionally pigments, corrosion inhibitors, anti-cratering agents, lacquer auxiliary substances, catalysts and organic solvents, wherein the mass ratio of component (A) to component (B) is 95 - 5% to 5 - 95%.

**2.** Use according to claim 1, characterised in that component (B) on average contains less than 0.5 terminal ester groups capable of transesterification on baking per molecule.

**3.** Use according to claim 2, characterised in that component (B) contains substantially no terminal ester groups capable of transesterification on baking.

**Revendications**

**1.** Utilisation de catalyseurs de transestérification et/ou d'estérification solubles et/ou insolubles pour la réticulation thermique à des températures supérieures à 100 °C de compositions aqueuses de revêtement par électrodéposition cathodique, qui contiennent

(A) une ou plusieurs résines de polycondensation, de polymérisation et/ou de polyaddition, tandis que la résine ou leur mélange dans le cas de la présence de plusieurs résines

a) a une masse molaire moyenne en nombre ($\overline{Mn}$) de 700 à 10 000,

b) contient 0 à 21,7 . $10^{23}$ de doubles liaisons latérales ou terminales pour 1000 g, ce qui correspond à un indice d'iode d'hydrogénation de 0 à 90,

c) contient des groupes hydroxyle primaires correspondant à un indice d'hydroxyle de 15 à 300, et

d) présente des groupes amino tertiaires correspondant à un indice d'amine de 30 à 150,

(B) des résines de polymérisation, de polycondensation et/ou de polyaddition ayant une masse molaire moyenne en nombre ($\overline{Mn}$) de 170 à 10 000 avec en moyenne au moins 2 groupes de formule générale

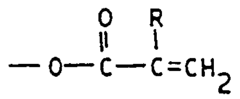 I

où R réprésente l'hydrogène ou le groupe méthyle, par molécule et moins d'un groupe ester terminal, apte à être transestérifié à la cuisson, par molécule,

et éventuellement des pigments, des inhibiteurs de corrosion, des agents anticratères, des adjuvants pour vernis, des catalyseurs et des solvants organiques, tandis que le rapport en masse entre le constituant (A) et le constituant (B) vaut entre 95 à 5% et 5 à 95%.

**2.** Utilisation selon la revendication 1, caractérisée en ce que le constituant (B) contient en moyenne moins de 0,5 groupes ester terminaux aptes à être transestérifiés à la cuisson par molécule.

**3.** Utilisation selon la revendication 2, caractérisée en ce que le constituant (B) ne contient pratiquement pas de groupes ester terminaux aptes à être transestérifiés à la cuisson.